# EUROPEAN PATENT SPECIFICATION

(11) **EP 1 243 736 B1**
(45) Date of publication and mention of the grant of the patent: **23.06.2004**
(21) Application number: 02076077.3
(22) Date of filing: 20.03.2002
(51) Int. Cl.: E05F 15/14, F16D 51/00, F16D 41/00, E05F 15/10, F16D 41/06

(54) **Powered gate and barrier drive with motion transmission mechanism controllable to be irreversible or reversible**
Irreversibel oder reversibel regelbare Bewegungsübertragungsvorrichtung für einen motorisierten Tür- und Torantrieb.
Entrainement motorisé de porte et de barriere avec mécanisme de transmission réglable pouvant etre réversibles ou irréversibles

(30) Priority: 21.03.2001 IT MI010600
(43) Date of publication of application: 25.09.2002
(73) Proprietor: Genius s.r.l., 24050 Grassobbio, Bergamo (IT)
(72) Inventor: Manini, Michelangelo, 40135 Bologna (IT)
(74) Representative: Faraggiana, Vittorio, Dr. Ing.

(56) References cited:
- WO-A-00/08350
- US-A- 4 706 791
- US-A- 5 788 021
- PATENT ABSTRACTS OF JAPAN vol. 1995, no. 07, 31 August 1995 (1995-08-31) & JP 07 103260 A (ALPHA SUPPLY KK), 18 April 1995 (1995-04-18)

## Description

The present invention relates to a powered gate and barrier drive with motion transmission mechanism controllable between a reversible and an irreversible transmission condition.

In gate drives when the actuator is off, the gate in general should not be movable or openable manually for obvious security reasons.

On the other hand, in case of need, for example failure of the gate opener or of electric power, it should always be possible to move the gate by hand.

To achieve this, the prior art proposed irreversible transmission drives with a device termed 'release' which releases the gate on command from the irreversible part of the transmission to allow manual gate movement. Examples of irreversible transmission drives are disclosed by the Japanese publication N°-JP 07 103 260 and the U.S. patents US 5,788,021 and US 4,706,791.

As an alternative, with opposite functioning, in the prior are there have also been provided actuators with reversible transmission and electric or mechanical brakes which are operated when the gate must be manually unmovable.

In both cases there are various disadvantages. For example, with the irreversible transmission the mechanism must by oversized to resist possible loads deriving from widely variable conditions independent of the system such as forcing of the wing, wind action et cetera instead of being sized only for the maximum load transmitted by the power unit. In the case of a reversible transmission for example the need to provide relatively costly systems such as electric brakes and springs or members subject to wear such as friction disks et cetera to the detriment of long term durability and reliability of the system.

Gate actuator manufacturers must in any case keep two different product lines to be able to supply either reversible or irreversible actuators on request of customers. This involves added costs because of the reduced standardization possible in production and the reduced flexibility in stock management.

The general purpose of the present invention is to obviate the above mentioned disadvantages and also others by making available a gate and barrier actuator which would have reversible or irreversible behavior as needed.

In view of this purpose it is sought to realize in accordance with the present invention a powered drive for moving gates and barriers having the features mentioned in claim 1.

To clarify the explanation of the innovative principles of the present invention and its advantages compared with the prior art there is described below with the aid of the annexed drawings a possible embodiment thereof by way of non-limiting example applying said principles. In the drawings:
- FIG 1 shows a diagrammatic view of an example of an actuator employing the principles of the present invention,
- FIG 2 shows a longitudinal cross section of a detail of the actuator of FIG 1 in a first setting of irreversible transmission.
- FIG 3 shows a view similar to that of FIG 2 but in a second setting of reversible transmission,
- FIG 4 shows a diagrammatic cross section view generally along plane of cut IV-IV OF FIG 2, and
- FIGS 5 and 6 show diagrammatic views similar to that of FIG 4 in opposite drive conditions.

With reference to the figures a powered drive for movement of gates and barriers designated as a whole by reference number 10 comprises an electric motor 11 and a mechanical motion transmission 12 for movement of the gate or barrier. In the figure is shown advantageously a linear actuator arranged with its own couplings 13, 14 between a support 15 fixed in the ground and a wing 16 hinged to rotate around an axis 17.

Along the mechanical transmission located in the actuator there are a drive shaft 18 and a corresponding driven shaft 19 connected together by means of a connecting mechanism 20 realized in accordance with the present invention.

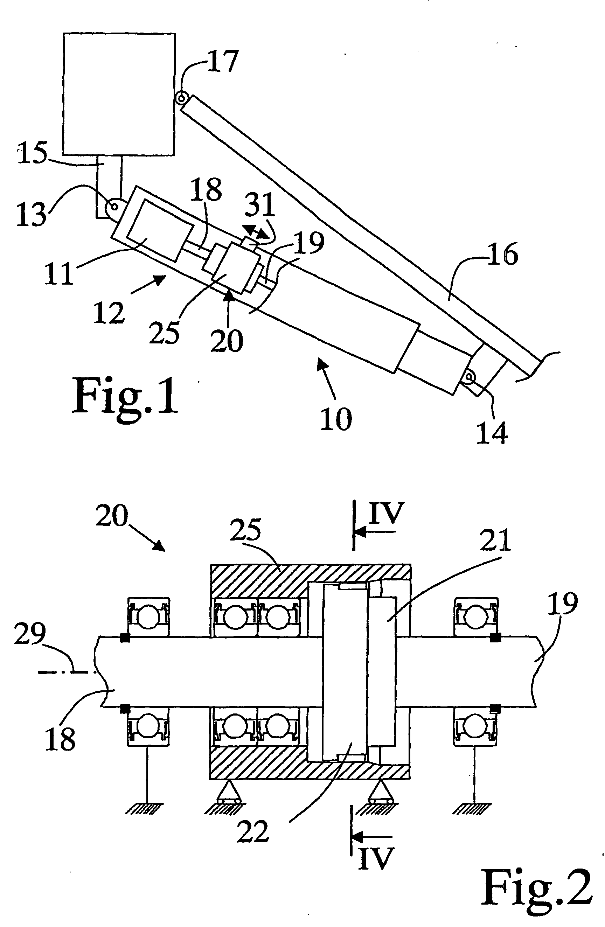

FIGS 2 to 6 show diagrammatically the connecting mechanism 20. As may be seen in these figures the driven shaft 19 is connected to a first cam member 21 while the drive shaft 18 is connected to a cage member 22. These two members engage together with limited mutual angular play as clarified below.

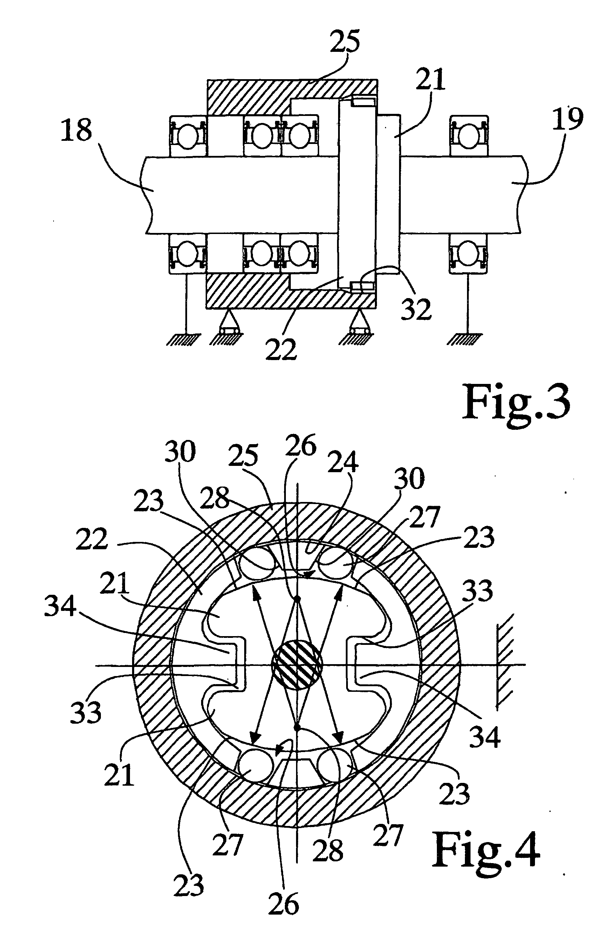

As may be seen in FIG 4 the cam member 21 defines cam surfaces 23 turned outward to face opposing surfaces 24 which are locked against rotation. The opposing surfaces 24 are advantageously made up of an internal surface of a sleeve or cylinder 25 axially arranged around the cage member 22.

The cam surfaces are advantageously arcs of a circle with centers 28 arranged on the same axis of symmetry as the cam and two by two on opposing sides of the cam with respect to its rotation axis 29. The cam member defines four two by two cam surfaces 23 symmetrical to the axis of symmetry of the cam member with each cam surface acting on a corresponding jamming member.

The cage member has passages 26 arranged on the exterior of the cam surfaces and opening towards the cam surface and towards the facing opposing surfaces. Within the passages 26 jamming members are arranged with side play. The jamming members are advantageously rollers with axis parallel to the rotation axis 29 of the cam 21.

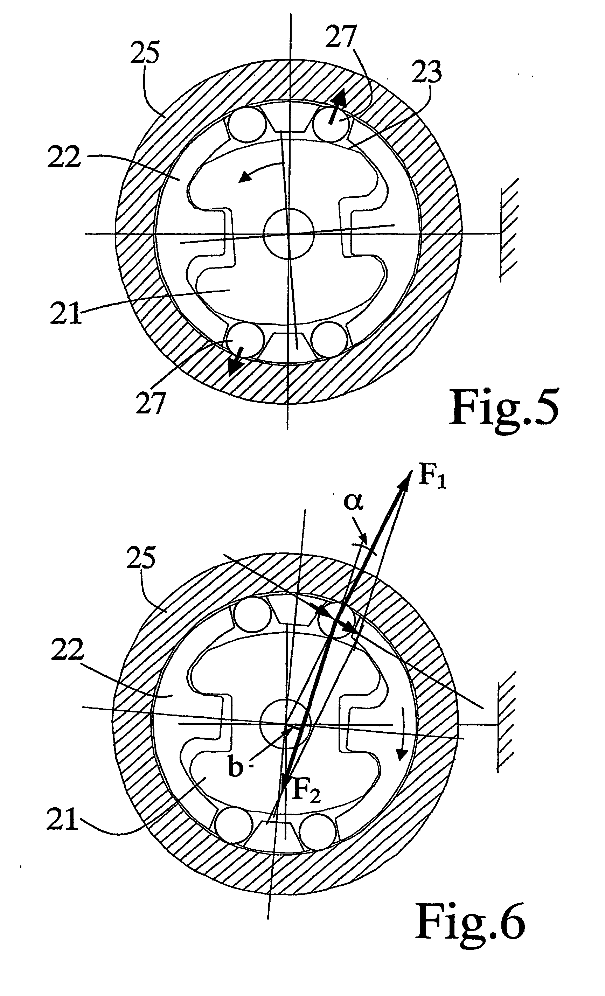

The passages 26 define inclined surfaces 30 for thrust against the jamming members in such a manner that upon application of a rotation torque on the drive shaft 18 in at least some of the passages 26 walls 30 of the passage thrust against the jamming member 27 therein to press it against the cam surface 23 which faces into the passage. This situation is shown diagrammatically in FIG 6 where it is seen that the force F produced on the jamming member by the torque applied to the drive shaft rotating clockwise in the figure is resolved into a force F1 and a force F2 which are normal to the respective tangents at the points of contact of the jamming member with the opposing surface and the cam surface. The force F2 produces with its arm b a rotation torque on the cam member so as to cause rotation of the driven shaft connected thereto. The same would occur with another jamming member if the direction of rotation of the drive shaft were the reverse.

Basically, by applying a torque to the drive shaft the driven shaft is always made to rotate and the actuator of the present invention operates normally.

It was found advantageous that the angle a formed between the straight line defined by the normal to the tangent of contact between the jamming member and the opposing surface and the straight line defined by the normal to the contact tangent between the jamming member and the cam surface be more than 8° and preferably more than or near 8.16°.

On the contrary, if rotation torque is applied on the driven shaft, i.e. it is attempted to move the gate or barrier by applying an external force, the condition shown diagrammatically in FIG 5 is created. As seen in said figure the cam surfaces 23 rotating counterclockwise in FIG 5 reduce the space in at least some passages 26 to bring about a fixed condition of at least some jamming members between the cam surface and the facing opposing surface as indicated by the arrows in FIG 5. As a result the driven shaft stops rotating as it jams against the sleeve 25 fastened in the ground. Basically, if the torque is applied to the driven shaft the transmission locks up and is therefore irreversible.

In the advantageous embodiment shown the passages 26 with their jamming members in pairs are formed in an opposing manner, i.e. with opposed surfaces 30, so as to realize thrust on the cam or jamming between the cam and the opposing surface of one or the other torque members. In other words, upon rotation in one direction or the other the diametrically opposed jamming members always act with the upper right and lower left one for one rotation direction and the upper left and lower right one for the other rotation direction.

The device in accordance with the present invention also comprises means of selection which can be operated to control the reversible or irreversible transmission condition. These means act when reversible transmission is desired in such a manner as to prevent reaching of the above mentioned condition of fixing of the rollers.

In the embodiment shown this is obtained due to the fact that the selection means comprise members for withdrawing said opposing surfaces 24 from the cam to a distance greater than that recoverable by rotating of the cam and allowed by the relative play between the drive and driven motors. In other words, in the reversible motion condition the driven and drive shafts reach the end of their mutual rotation and thus begin to rotate integrally in one direction before the cam has pushed the rollers out enough to be mutually fixed with the opposing surfaces.

To secure said withdrawal of the opposing surfaces it was found particularly advantageous that the sleeve 25 defining said opposing surfaces internally be mounted sliding axially to move on command said opposing surfaces far from the jamming members. This is clear from a comparison of FIG 2 (irreversible motion condition) with FIG 3 (reversible motion condition). As seen in FIG 3, the sleeve 25 has advantageously a cross section 32 with increased internal diameter which moves to a position opposite the jamming members when the opposing surfaces are in the withdrawn position. The increased diameter section thus realizes an end of travel surface for the rollers towards the outside of the respective passages in the cage 22.

To accomplish movement of the sleeve between the two end positions there can be provided for example a slide handle 31 (FIG 1), which can be operated from the outside of the actuator - for example after operation of an appropriate safety lock not shown - to release the manual gate movement when necessary.

To have the limited angular play between the drive and driven shafts so that there is integral movement of the drive and driven shafts in reversible motion condition at least one side seat 33 is advantageously provided in the cam to receive with the necessary play a corresponding tooth 34 of the cage 22. Advantageously in the embodiment shown the side seats 33 are two in number arranged between opposing cam surfaces and symmetrically located along an axis of symmetry of the cam and each tooth is arranged in an intermediate position between two pairs of passages 26 shaped in an opposing manner.

It is now clear that the predetermined purposes have been achieved by making available an actuator which with a simple operation can operate as a reversible or irreversible actuator while eliminating the need to choose the type of transmission beforehand and, depending on the choice, having to equip the actuator with operating means for lockout of the reversible transmission or release of the irreversible transmission. This makes it possible to have more economical and reliable actuators. In addition it is possible to size the mechanism for the maximum handling load and not for resisting the external stresses on the gate or barrier.

Since with the system in accordance with the present invention the choice of the transmission type takes place with a simple operation it is possible to obtain high standardization in actuators with resulting greater production economy and store house management flexibility. Naturally the above description of an embodiment applying the innovative principles of the present invention is given by way of non-limiting example of said principles within the scope of the exclusive right claimed here.

For example although the solution was found advantageous for linear actuators, it should not be understood as limited to that type of drive for gates or barriers. In addition the exact sizing, proportions or positioning of the various parts can vary according to practical exigencies or preferences. In addition, although in the embodiment shown it was found advantageous to prevent reaching the jamming condition while withdrawing the opposing surface from the cam it is also possible to prevent reaching of the jamming condition by reducing the mutual rotation angle allowed between the driven and drive shafts. This can be achieved for example by inserting shims between entrainment teeth and their respective seats.

## Claims

1. Powered actuator for moving gates and barriers comprising a kinematical transmission (12) of motion along which are a drive shaft (18) and a corresponding driven shaft (19) with the drive and driven shafts interconnected with limited mutual angular play and with the driven shaft (19) being connected to a cam member (21) defining cam surfaces (23) turned radially outward to face opposing surfaces (24) which are locked against rotation and with the drive shaft (18) being connected to a cage member (22) radially placed between the cam surfaces and the opposing surfaces and having passages (26) arranged outside the cam surfaces (23), adjacent thereto, and open towards the cam surface (23) and towards the facing opposing surface (24) with jamming members (27) being arranged, in said passages (26) with circumferential side play, so as to accomplish an irreversible transmission, wherein upon application of a rotational torque on the drive shaft (18) in at least some passages (26) passage walls (30) thrust against the jamming member (27) therein to press it against the cam surface (23) facing the passage (26) and transmit rotational torque to the cam member (21) so as to cause rotation of the driven shaft (19) connected thereto, while upon application of a rotational torque to the driven shaft (19) the cam surfaces (23) reduce the radial space in at least some passages (26) to bring about a condition of jamming of at least some jamming members (27) between the cam surface (23) and the facing opposing surface (24) with resulting lockout of driven shaft rotation, charaterized in that the actuator comprises controllable means (25) suitable to prevent upon actuation reaching of said jamming condition, said controllable means (25) forming selection means of a reversible or irreversible transmission condition of the kinematic transmission (12).

2. Actuator in accordance with claim 1 **characterized in that** the selection means comprise members (25) for withdrawing said opposing surfaces (24) from the cam (21) of a distance greater than that recoverable by rotation of the cam (21) and allowed by the relative play between the drive and driven shafts.

3. Actuator in accordance with claim 2 **characterized in that** the selection means comprise a sleeve (25) arranged axially around the cage member (22) with the sleeve (25) defining with one of its internal surfaces (24) said opposing surfaces and being axially sliding on command to move said opposing surfaces (24) away from the jamming members (27) to a withdrawn position.

4. Actuator in accordance with claim 3 **characterized in that** the sleeve (25) has an increased internal diameter cross section (32) which shifts opposite the jamming members (27) when said opposing surfaces (24) are in the withdrawn position.

5. Actuator in accordance with claim 1 **characterized in that** the jamming members are rollers (27).

6. Actuator in accordance with claim 1 **characterized in that** the cam member (21) defines four cam surfaces (23) two by two symmetrical with respect to axes of symmetry of the cam member (21) with each cam surface (23) acting on a corresponding jamming member (27).

7. Actuator in accordance with claim 6 **characterized in that** the four cam surfaces (23) are four arcs of circle with centers (28) arranged on the same axis of symmetry of the cam (21), the four arcs being arranged two by two on opposite sides of the cam (21) with respect to its rotation axis (29).

8. Actuator in accordance with claim 1 **characterized in that** the cam member (21) defines at least one side seat (33) between the cam surfaces (23) which receives with play a corresponding tooth (34) projecting from the cage member (22) to allow said limited angular play.

9. Actuator in accordance with claim 1 **characterized in that** the passages (26) with respective jamming members (27) are shaped in pairs in an opposing manner to provide thrust on the cam (21) or jamming between the cam (21) and the opposing surface (24) of one or the other member of the pair.

10. Actuator in accordance with claims 8 and 9 **characterized in that** the seats (33) and teeth (34) are two in number with the seats (33) being arranged symmetrically along an axis of symmetry of the cam (21) and each tooth (34) being arranged in an intermediate position between two pairs of passages (26) shaped in an opposing manner.

11. Actuator in accordance with claim 1 **characterized in that** the angle formed between the straight line defined by the normal to the tangent of contact between jamming member (27) and opposing surface (24) and the straight line defined by the normal to the tangent of contact between the jamming member (27) and the cam surface (23) is more than 8°.

12. Actuator in accordance with claim 1 **characterized in that** it is a linear actuator.

## Patentansprüche

1. Hilfskraftbetätigter Antrieb zum Bewegen von Toren und Schranken mit einem kinematischen Bewegungsgetriebe (12), längs dem eine Antriebswelle (18) und eine zugehörige getriebene Welle (19) angeordnet sind, wobei die Antriebswelle und die getriebene Welle mit begrenztem gegenseitigen Winkelspiel verbunden sind und wobei die getriebene Welle (19) mit einem Nockenteil (21) verbunden ist, welches radial nach auswärts weisende Nockenflächen aufweist, welche Gegenflächen (24) gegenüberstehen, die gegen Drehung blockiert sind, und wobei die Antriebswelle (18) mit einem Käfigteil (22) verbunden ist, welches radial zwischen den Nockenflächen und den Gegenflächen plaziert ist und Durchlässe (26) benachbart und außerhalb der Nockenflächen (23) aufweist, die zu der Nockenfläche (23) und der dieser gegenüberliegenden Gegenfläche (24) offen sind, wobei Klemmkörper (27) in den Durchlässen (26) mit seitlichem Spiel in Umfangsrichtung angeordnet sind, um eine einsinnige Kraftübertragung mit Selbsthemmung in Gegenrichtung zu bewirken, wobei auf Ausüben eines Drehmomentes auf die Antriebswelle (18) in mindestens einigen Durchlässen (26) deren Wände (30) an den Klemmkörpern (27) anlaufen, um diese gegen die dem Durchlaß (26) gegenüberstehende Nockenfläche zu pressen und ein Drehmoment auf das Nockenteil (21) zu übertragen und somit Drehung der damit verbundenen getriebenen Welle (19) zu erzeugen, während bei Ausüben eines Drehmomentes auf die getriebene Welle (19) die Nockenflächen (23) den radialen Abstand in mindestens einigen Durchlässen (26) vermindern, um einen Klemmzustand mindestens einiger Klemmkörper (27) zwischen der Nockenfläche (23) und der gegenüberliegenden Gegenfläche (24) herbeizuführen, der Blockieren einer Drehung der getriebenen Welle erzeugt, **dadurch gekennzeichnet, daß** der Antrieb steuerbare Mittel (25) umfaßt, die dazu fähig sind, bei Betätigung ein Erreichen des Blockierzustandes zu verhindern, wobei die steuerbaren Mittel (25) ein Wählmittel zum Wählen eines reversiblen oder irreversiblen (selbsthemmenden) Kraftübertragungszustandes des kinematischen Getriebes (12) bilden.

2. Antrieb nach Anspruch 1, **dadurch gekennzeichnet, daß** das Wählmittel Bauteile (25) zum Entfernen der Gegenflächen (24) von dem Nocken (21) um einen Abstand aufweisen, der größer ist als der durch Drehung des Nockens (21) wiederherstellbare und durch das relative Spiel zwischen der Antriebswelle und der getriebenen Welle zugelassene Abstand.

3. Antrieb nach Anspruch 2, **dadurch gekennzeichnet, daß** das Wählmittel eine Hülse (25) umfaßt, die axial um das Käfigteil (22) herum angeordnet ist und mit einer ihrer Innenflächen (24) die besagten Gegenflächen bildet und auf Anforderung axial gleitbar ist, um die Gegenflächen (24) von dem Klemmkörper (27) weg in eine Ruheposition zu bewegen.

4. Antrieb nach Anspruch 3, **dadurch gekennzeichnet, daß** die Hülse (25) einen Abschnitt (32) mit vergrößertem Innendurchmesser aufweist, der sich entgegen den Klemmkörpern (27) verlagert, wenn die Gegenflächen (24) in der Ruheposition sind.

5. Antrieb nach Anspruch 1, **dadurch gekennzeichnet, daß** die Klemmkörper Rollen (27) sind.

6. Antrieb nach Anspruch 1, **dadurch gekennzeichnet, daß** das Nockenteil (21) vier Nockenflächen (23) bildet, die bezüglich der Symmetrieachse des Nockenteils (21) paarweise symmetrisch angeordnet sind, wobei jede Nockenfläche (23) auf einen zugehörigen Klemmkörper (27) einwirkt.

7. Antrieb nach Anspruch 6, **dadurch gekennzeichnet, daß** die vier Nockenflächen (23) vier Kreisflächen sind, deren Mittelpunkte (28) auf der Symmetrieachse des Nockenteiles (21) liegen, wobei die vier Kreisflächen paarweise auf entgegengesetzten Seiten des Nockens (21) bezüglich seiner Drehachse (29) angeordnet sind.

8. Antrieb nach Anspruch 1, **dadurch gekennzeichnet, daß** das Nockenteil (21) mindestens einen Seitensitz (33) zwischen den Nockenflächen (23) bildet, der mit Spiel einen zugehörigen Zahn (34) aufnimmt, welcher von dem Käfigteil (22) vorsteht, um das begrenzte Winkelspiel zu ermöglichen.

9. Antrieb nach Anspruch 1, **dadurch gekennzeichnet, daß** die Durchlässe (26) mit den entsprechenden Klemmkörpern (27) paarweise gegenüber angeordnet sind, um Andruck an dem Nockenteil (21) oder Klemmung zwischen dem Nocken (21) und der Gegenfläche (24) des einen oder des anderen Teils das Paares zu erzeugen.

10. Antrieb nach Anspruch 8 und 9, **dadurch gekennzeichnet, daß** die Sitze (33) und Zähne (34) doppelt vorgesehen sind, wobei die Sitze (33) symmetrisch längs einer Symmetrieachse des Nockenteils (21) und jeder Zahn (34) in einer Zwischenstellung zwischen zwei Paaren Durchlässen (26) angeordnet sind, welche gegenüberliegend angeordnet sind.

11. Antrieb nach Anspruch 1, **dadurch gekennzeichnet, daß** der Winkel zwischen der Geraden, welche durch die Normale zur Tangente an den Berührungspunkt zwischen dem Klemmkörper (27) und der Gegenfläche (24) definiert ist, und der Geraden, welche durch die Normale zur Tangente im Berührungspunkt zwischen dem Klemmkörper (27) und der Nockenfläche (23) definiert ist, größer als 8° ist.

12. Antrieb nach Anspruch 1, **dadurch gekennzeichnet, daß** er ein Linearantrieb ist.

## Revendications

1. Actionneur motorisé pour déplacer des portails et des barrières, comprenant une transmission cinématique (12) de mouvement le long de laquelle se trouvent un arbre d'entraînement (18) et un arbre entraîné (19) correspondant, les arbres d'entraînement et entraîné étant interconnectés avec un jeu angulaire réciproque limité, l'arbre entraîné (19) étant connecté à un élément de came (21) définissant des surfaces de came (23) tournées radialement vers l'extérieur afin de faire face à des surfaces opposées (24) qui sont verrouillées de manière à ne pas pouvoir tourner et l'arbre d'entraînement (18) étant connecté à un élément cage (22) placé radialement entre les surfaces de came et les surfaces opposées et possédant des passages (26) disposés à l'extérieur des surfaces de came (23) de manière adjacente à celle-ci et ouverts vers la surface de came (23) et la surface opposée faisant face (24), des éléments de calage (27) étant disposés dans lesdits passages (26) avec ledit jeu latéral circonférentiel de manière à effectuer une transmission irréversible, dans lequel, lors de l'application d'un couple rotatif sur l'arbre d'entraînement (18) dans quelques passages (26) au moins, les parois (30) des passages poussent contre l'élément de calage (27) dans celui-ci de manière à le presser contre la surface de came (23) faisant face au passage (26) et à transmettre le couple rotatif à l'élément came (21) de manière à assurer la rotation de l'arbre entraîné (19) qui y est connecté, tandis que lors de l'application d'un couple rotationnel sur l'arbre entraîné (19), les surfaces de came (23) réduisent l'espace radial dans quelques-uns au moins des passages (26) de manière à amener un état de calage d'au moins quelques éléments de calage (27) entre la surface de came (23) et la surface opposée faisant face (24) et à verrouiller ainsi la rotation de l'arbre entraîné, **caractérisé en ce qu'**il comprend des moyens contrôlables (25) permettant d'éviter lors de l'actionnement que l'on arrive au dit état de calage, lesdits moyens contrôlables (25) formant un moyen de sélection d'état de transmission réversible ou irréversible de la transmission cinématique (12).

2. Actionneur selon la revendication 1, **caractérisé en ce que** le moyen de sélection comprend des éléments (25) permettant de retirer lesdites surfaces opposées (24) de la came (21) sur une distance supérieure à celle qui peut être parcourue en faisant tourner la came (21) et qui est permise par le jeu relatif entre le moteur d'entraînement et le moteur entraîné.

3. Actionneur selon la revendication 2, **caractérisé en ce que** le moyen de sélection comprend un manchon (25) disposé axialement autour de l'élément cage (22), le manchon (25) définissant avec une de ses surfaces internes (24) lesdites surfaces opposées et pouvant coulisser axialement sur commande afin de déplacer lesdites surfaces opposées (24) et de les éloigner des éléments de calage (27) vers une position de retrait.

4. Actionneur selon la revendication 3, **caractérisé en ce que** le manchon (25) possède une section transversale (32) d'un diamètre interne accru qui se décale face aux éléments de calage (27) lorsque lesdites surfaces opposées (24) sont dans la position de retrait.

5. Actionneur selon la revendication 1, **caractérisé en ce que** les éléments de calage consistent en des galets (27).

6. Actionneur selon la revendication 1, **caractérisé en ce que** l'élément came (21) définit quatre surfaces de came (23) disposées deux par deux et symétriques par rapport aux axes de symétrie de l'élément came (21), chaque surface de came (23) agissant sur un élément de calage (27) correspondant.

7. Actionneur selon la revendication 6, **caractérisé en ce que** les quatre surfaces de came (23) consistent en quatre arcs de cercle dont les centres (28) se situent sur le même axe de symétrie que la came (21), les quatre arcs étant disposés deux par deux sur des côtés opposés de la came (21) par rapport à son axe de rotation (29).

8. Actionneur selon la revendication 1, **caractérisé en ce que** l'élément came (21) définit au moins un siège latéral (33) entre les surfaces de came (23), qui reçoit avec un jeu une dent correspondante (34) dépassant de l'élément cage (22) afin de permettre un jeu angulaire limité.

9. Actionneur selon la revendication 1, **caractérisé en ce que** les passages (26) avec les éléments de calage respectifs (27) se présentent sous forme de paires et de manière opposée afin de fournir une poussée sur la came (21) ou un calage entre la came (21) et la surface opposée (24) de l'un ou de l'autre des éléments de la paire.

10. Actionneur selon les revendications 8 et 9, **caractérisé en ce que** les sièges (33) et les dents (34) sont au nombre de deux, les sièges (33) étant disposés symétriquement le long d'un axe de symétrie de la came (21), tandis que chaque dent (34) est disposée en une position intermédiaire entre deux paires de passages (26) formées de manière opposée.

11. Actionneur selon la revendication 1, **caractérisé en ce que** l'angle formé entre la ligne droite définie par la perpendiculaire à la tangente du contact entre l'élément de calage (27) et la surface opposée (24), et la ligne droite définie par la perpendiculaire à la tangente de contact entre l'élément de calage (27) et la surface de came (23), est de plus de 8°.

12. Actionneur selon la revendication 1, **caractérisé en ce qu'**il consiste en un actionneur linéaire.
